# EUROPEAN PATENT SPECIFICATION

(11) **EP 4 387 802 B1**
(45) Date of publication and mention of the grant of the patent: **11.11.2026**
(21) Application number: 22859170.7
(22) Date of filing: 18.08.2022
(51) Int. Cl.: B29C 65/08, B29C 65/78, B29C 35/02

(54) **ULTRASONIC CONSOLIDATION OF MATERIALS**
ULTRASCHALLVERFESTIGUNG VON MATERIALIEN
CONSOLIDATION ULTRASONORE DE MATÉRIAUX

(30) Priority: 18.08.2021 US 202163234445 P
(43) Date of publication of application: 26.06.2024
(73) Proprietor: Agile Ultrasonics Corp., Hilliard, OH 43026 (US)
(72) Inventor: SHORT, Matthew, A., Hilliard, OH 43026 (US); STRATTON, James, Hilliard, OH 43026 (US)
(74) Representative: Mewburn Ellis LLP
(86) International application number: PCT/US2022/040776
(87) International publication number: WO 2023/023259

(56) References cited:
- WO-A1-2006/087224
- WO-A1-2017/220327
- JP-A- 2011 063 002
- JP-A- 2012 066 546
- US-A1- 2017 253 358
- US-A1- 2018 290 230
- US-A1- 2021 086 290
- US-A1- 2021 154 944

## Description

### BACKGROUND

The disclosed inventive subject matter relates in general to manufacturing and fabricating systems, devices, and methods, and more specifically to a system, device, and method for ultrasonic consolidation of materials such as, for example, materials containing carbon fiber.

The use of ultrasonic welding processes to weld multiple layers of carbon fiber reinforced polymers (CFRP) into consolidated structures has proven largely unsuccessful without the use of energy directors or a sacrificial melt layer; or when the anvil component of an ultrasonic welding system includes a rigid surface against which layers of CFRP have been placed. Known welding practices fixture thermoplastic or thermoplastic composites against a rigid anvil; however, if these practices are used with CFRP tapes, braids, or pre-consolidated plates, welds cannot typically be achieved, without employing the use of traditional energy directors or secondary materials for enhancing the welding process. If welds are indeed achieved, the welds are often of an unsatisfactory nature. Accordingly, there is an ongoing need for an ultrasonic welding system that can effectively consolidate CFRP tapes into solid structures for use in a variety of applications, including automotive, aeronautic, and military applications.

US2017/253358A1 describes a method of forming an easily separable portion in packaging film by interposing at least two packaging films between a horn emitting ultrasonic waves and an anvil oppositely disposed to the horn, and vibrating the packaging films by the ultrasonic waves, in which a vibratable layer is provided on the packaging film in at least one of the horn side and the anvil side.

JP2011063002A describes an ultrasonic welding method in which an object to be welded is ultrasonic-welded while a cushioning material is sandwiched at least between the object to be welded and a horn or between the object to be welded and an anvil.

US2018/290230A1 describes an ultrasonic welding method in which ultrasonic vibration is imparted to a first resin member via a horn while applying a pressing force to the first resin member and a second resin member in which weld portions come into contact with each other by using a jig for supporting the second resin member.

JP2012066546A describes a method of producing fusion material of thermoplastic liquid crystal polymer film using ultrasonic waves.

US2008210360 A1 discloses the welding of parts made of pre-impregnated superimposed layers of reinforcing fibres involving a sonotrode, stabilising rollers upstream thereof and pressing rollers downstream thereof.

### SUMMARY

**In** a first aspect, there is provided a system for consolidating materials as defined in claim 1. In a second aspect, there is provided a method for consolidating materials according to claim 9. The following provides a summary of certain example implementations of the disclosed inventive subject matter. This summary is not an extensive overview and is not intended to identify key or critical aspects or elements of the disclosed inventive subject matter or to delineate its scope. However, it is to be understood that the use of indefinite articles in the language used to describe and claim the disclosed inventive subject matter is not intended in any way to limit the described inventive subject matter. Rather the use of "a" or "an" should be interpreted to mean "at least one" or "one or more".

An example implementation of the disclosed technology provides a first system for consolidating materials. This system comprises a sonotrode configured to direct ultrasonic energy into materials to be consolidated, wherein the materials to be consolidated have both an inherent glass transition temperature and an inherent melting temperature; a non-rigid consolidating material in proximity to the sonotrode, wherein the non-rigid consolidating material and sonotrode define a region therebetween for receiving the materials to be consolidated, and wherein the non-rigid consolidating material has an inherent glass transition temperature that is higher than the inherent glass transition temperature of the materials to be consolidated and an inherent melting temperature that is higher than the inherent melting temperature of the materials to be consolidated.

The system may further comprise a rigid anvil for supporting the non-rigid consolidating material. The system may further comprise at least one force sensor and at least one thermal sensor. The system further comprises an incoming material anvil positioned on one side of the sonotrode and an outgoing material anvil positioned on the opposite side of the sonotrode, wherein the anvils are configured to provide compressive force on the materials being consolidated, and wherein the anvils are configured to either cool or heat the materials being consolidated. The system may further comprise at least one ultrasonic transducer configured to provide ultrasonic energy to the sonotrode, wherein the at least one ultrasonic transducer is mounted in an articulated housing, and wherein the articulating housing is configured to provide the sonotrode with compressive force and varying angles of contact (or attack) relative to placement of the materials to be consolidated (i.e., approaching surface normal with respect to complex surface geometries). The sonotrode may include a radiused or tapered face profile, and the sonotrode may be configured for consolidating either narrow components of a predetermined width or wide components of a predetermined width. The sonotrode may include integrated hold-down structures configured to contact the materials being consolidated. The materials to be consolidated may be thermoplastic materials, thermoset materials, or carbon fiber reinforced polymers and may be configured as layers of material or sheets of material. The non-rigid consolidating material may include thermoplastic material, thermoset material, silicone, polyamide, urethane, rubber, glass woven sheets, glass, carbon fiber material, or various combinations thereof and may be configured as layers of material, sheets of material, or preconsolidated structures. The non-rigid consolidating material may have a hardness between 40 and 100 Shore A.

Another example implementation of the disclosed technology provides a second system for consolidating materials. This system comprises at least one ultrasonic transducer configured to provide ultrasonic energy to a sonotrode, wherein the at least one ultrasonic transducer is mounted in an articulated housing configured to provide the sonotrode with compressive force and varying angles of contact relative to placement of the materials to be consolidated, wherein the sonotrode is configured to direct ultrasonic energy into materials to be consolidated, and wherein the materials to be consolidated have both an inherent glass transition temperature and an inherent melting temperature; a non-rigid consolidating material in proximity to the sonotrode, wherein the non-rigid consolidating material and sonotrode define a region therebetween for receiving the materials to be consolidated, and wherein the non-rigid consolidating material has an inherent glass transition temperature that is higher than the inherent glass transition temperature of the materials to be consolidated and an inherent melting temperature that is higher than the inherent melting temperature of the materials to be consolidated; and an incoming material anvil positioned on one side of the sonotrode and an outgoing material anvil positioned on the opposite side of the sonotrode, wherein the anvils are configured to provide additional compressive force on the materials being consolidated, and wherein the anvils are configured to either cool or heat the materials being consolidated.

The system may further comprise a rigid anvil for supporting the non-rigid consolidating material. The system may further comprise at least one force sensor and at least one thermal sensor. The sonotrode may include a radiused or tapered face profile, and the sonotrode may be configured for consolidating either narrow components of a predetermined width or wide components of a predetermined width. The sonotrode may include integrated hold-down structures configured to contact the materials being consolidated. The materials to be consolidated may be thermoplastic materials, thermoset materials, or carbon fiber reinforced polymers and may be configured as layers of material, sheets of material, or preconsolidated structures. The non-rigid consolidating material may include thermoplastic material, thermoset material, silicone, polyamide, urethane, rubber, glass woven sheets, glass, carbon fiber material, or various combinations thereof and may be configured as layers of material or sheets of material. The non-rigid consolidating material may have a hardness between 40 and 100 Shore A.

Still another example implementation of the disclosed technology provides a method for consolidating materials. This method comprises configuring a sonotrode to direct ultrasonic energy into materials to be consolidated and exert compressive force on the materials to be consolidated, wherein the materials to be consolidated have both an inherent glass transition temperature and an inherent melting temperature; placing a non-rigid consolidating material in proximity to the sonotrode, wherein the non-rigid consolidating material and sonotrode define a region therebetween for receiving the materials to be consolidated, and wherein the non-rigid consolidating material has an inherent glass transition temperature that is higher than the inherent glass transition temperature of the materials to be consolidated and an inherent melting temperature that is higher than the inherent melting temperature of the materials to be consolidated; and joining the materials to be consolidated by activating the sonotrode and moving the sonotrode across the materials under compressive force.

It should be appreciated that all combinations of the foregoing concepts and additional concepts discussed in greater detail below (provided such concepts are not mutually inconsistent) are contemplated as being part of the inventive subject matter disclosed herein and may be implemented to achieve the benefits as described herein. Additional features and aspects of the disclosed system, devices, and methods will become apparent to those of ordinary skill in the art upon reading and understanding the following detailed description of the example implementations.

### BRIEF DESCRIPTION OF THE DRAWINGS

The accompanying drawings, which are incorporated into and form a part of the specification, schematically illustrate one or more example implementations of the disclosed inventive subject matter and, together with the general description given above and detailed description given below, serve to explain the principles of the disclosed subject matter, and wherein:
FIG. 1A is a front view of a system and apparatus for the ultrasonic consolidation of materials, in accordance with a first example implementation of the disclosed technology;
FIG. 1B is a front, perspective view of the system and apparatus of FIG. 1A;
FIG. 2A is a front view of a system and apparatus for the ultrasonic consolidation of materials, in accordance with a second example implementation of the disclosed technology;
FIG. 2B is a front, perspective view of the system and apparatus of FIG. 2A;
FIG. 3 is a front view of a system and apparatus for the ultrasonic consolidation of materials, in accordance with a third example implementation of the disclosed technology;
FIG. 4 depicts a first example configuration of the sonotrode, anvil, layer(s) of consolidating material, and layers of material to be consolidated placed relative to one another in accordance with the disclosed technology;
FIG. 5 depicts a second example configuration of the sonotrode, anvil, layer(s) of consolidating material, and layers of material to be consolidated placed relative to one another in accordance with the disclosed technology;
FIG. 6 depicts a third example configuration of the sonotrode, anvil, layer(s) of consolidating material, and layers of material to be consolidated placed relative to one another in accordance with the disclosed technology;
FIG. 7 depicts a fourth example configuration of the sonotrode, anvil, and layers of material to be consolidated placed relative to one another in accordance with the disclosed technology; and
FIG. 8 depicts a fifth example configuration of the sonotrode, anvil, layer(s) of consolidating material, and layers of material to be consolidated placed relative to one another in accordance with the disclosed technology.

### DETAILED DESCRIPTION

Example implementations are now described with reference to the Figures. Reference numerals are used throughout the detailed description to refer to the various elements and structures. Although the following detailed description contains many specifics for the purposes of illustration, a person of ordinary skill in the art will appreciate that many variations and alterations to the following details are within the scope of the disclosed inventive subject matter. Accordingly, the following implementations are set forth without any loss of generality to, and without imposing limitations upon, the claimed subject matter.

The disclosed technology provides systems, devices, and methods for ultrasonic consolidation of multiple layers of certain types of materials into laminate structures. With reference to the Figures, a generic example implementation of the disclosed system includes an ultrasonic stack (ultrasonic transmission line) that further includes an ultrasonic transducer, an ultrasonic booster, and an ultrasonic horn (sonotrode). The components of the ultrasonic stack are mounted within an articulating head assembly that is pressed downward (or toward the material being consolidated) with static force and that is moved in a lateral system motion. A power supply drives the ultrasonic transducer into ultrasonic vibrations that are transmitted through the ultrasonic booster and the sonotrode into multiple layers of target material, thereby causing the layers of material to be joined together (i.e., consolidated). The layers of material to be consolidated may be placed on a substrate having specific non-rigid, elastic, or compliant properties (referred to as a "consolidating material") and the substrate itself typically rests on a rigid support referred to as an anvil, although in some implementations, the substrate itself acts as the anvil. The sonotrode may be configured in various widths such as, for example, narrow for use in welding tapes of material or wide for welding sheets of material. The anvil may supported by a main processing surface having rigid characteristics. Although the main processing surface can remain stationary, incorporating multiple degrees of freedom, such as X-, Y-, Z-, I-, J, or K-axis movement, or any combination thereof, facilitates a means for spot welding or continuous scan welding of materials across complex surface geometries.

The articulating head assembly of the disclosed technology may be provided in numerous alternate configurations. In one implementation, the head assembly includes a rigid housing affixed to a supporting structure. Actuation of the ultrasonic transmission line can be performed with a pneumatic, hydraulic, or electro-mechanical device for exerting force on the materials to be consolidated. In another implementation, the head assembly includes a rigid housing affixed to the end of a numerically controlled multi-axis system in which the system structure has self-contained actuation for exerting force on the materials to be consolidated. In still another implementation, the head assembly includes a rigid housing affixed to the end of a robotically controlled articulating network of joints. Applying force to the materials to be consolidated can be accomplished by the network of robotic joints, and/or through a pneumatic, hydraulic, or electro-mechanical device contained within the housing. The disclosed welding system may also include a real time force sensor coupled between the articulating head assembly and force application actuator device for providing real-time feedback to the actuation device to provide increased or decreased force for delivering varying energy per unit area, thereby altering processing temperatures to be more suitable for consolidating the target material.

In an example implementation, the disclosed system includes an ultrasonic transmission line having a transducer with a resonant frequency between 10- kHz and 60-kHz, a booster facilitating rigid attachment of the transmission line to an articulating device while also amplifying or de-amplifying amplitude from the transducer, and an ultrasonic sonotrode for applying force as well as subjecting the material to be consolidated to intense ultrasonic vibrations for creating change in the material. Each component of the transmission line is designed to be ½ wavelength of the operating frequency. An array of ½ wavelength components can be installed to the transmission line. One example implementation requires only three components producing 1 and ½ wavelengths.

In an example implementation, the disclosed system includes an ultrasonic sonotrode having a radiused or tapered face profile that produces an ironing effect aligning fibers in the proper orientation of the layup (consolidated materials). Furthermore, utilizing a trailing backing bar which applies compressive force during solidification of the materials to be consolidated eliminates voids between subsequent layers.

In an example implementation, the disclosed welding system includes a thermally controlled contoured backing anvil providing consistent and uniform compressive force to the target materials during solidification. Moreover, the thermally controlled backing anvil may have temperature zones controlled with heating elements suitable for altering the cooling rate of the target materials, thereby influencing the performance of the materials and its end performance through a heat treatment process controlled by the thermally contoured backing anvil. This specifically controlled cooling rate function produces specifically tailored material properties of the consolidated materials.

In an example implementation, the disclosed system includes real-time thermal monitoring sensors that measure incoming and outgoing processing temperatures. Outfeed temperature sensors are important because fluctuations in temperature are altered by increasing/decreasing amplitude values within the ultrasonic transducer. Fluctuations in temperature are also altered by increasing/decreasing traversing velocity of the ultrasonic sonotrode across the materials to be consolidated. Fluctuations in temperature are also altered by increasing/decreasing both traversing velocity and applied amplitude of the ultrasonic sonotrode against the target material.

The disclosed systems, devices, and methods are effective for consolidating certain types of materials such as, for example, thermoplastic materials, thermoset materials, and carbon fiber reinforced polymer (CFRP) sheets or tapes. CFRP may refer to carbon fiber reinforced polymer, carbon fiber reinforced plastic, or carbon fiber reinforced polyethylene. CFRP may also refer to thermoplastic infused carbon fiber. The disclosed technology may be used consolidate numerous layers of thermoplastic or thermoset material. For example, a consolidated object or component made by the disclosed technology may include 2-24 layers of material or pre-consolidated plates or structures. Additional layers of tape, sheet material, or pre-consolidated structures may be used.

When the disclosed system is in operation, use of an appropriate non-rigid substrate material, also referred to as a "release layer" or "consolidating material" creates proper bonding of the layers of material being welded. However, an appropriate consolidating material will not form a bond with materials being consolidated. Such materials may include single or multiple thin layers or sheets of compliant, flexible, or pliable materials such as, by way of non-limiting example, thermoplastic material, thermoset material, silicone, polyamide, urethane, rubber glass woven sheets, glass, carbon fiber material, or various combinations thereof. Teflon (polytetrafluoroethylene (PTFE)) or any other material with similar properties may also be used as the consolidating material. Substrate thickness will vary depending on the thickness of the layers of material being consolidated with substrate thickness decreasing with increasing thickness of the layers being consolidated.

In some implementations, the non-rigid substrate material may not be present and the anvil itself may be made from a compliant, flexible, or pliable material. In one example, processing of carbon fiber reinforced polymer is performed on an elastic backing surface with a hardness between 40 and 100 Shore A. Furthermore, the elastic processing surface must be able to withstand processing temperatures between 150 and 600 degrees Celsius. Prior art ultrasonic processing thermoplastics methods teach the use of a rigid support structure, typically steel or aluminum to ensure consistent transmission of energy into a weld joint. In contrast to prior art systems, utilizing an elastic anvil structure produces an elastic rebound surface while serving as a heat sink-like structure that can be tailored with varying thickness and thermal properties for controlling cooling rates.

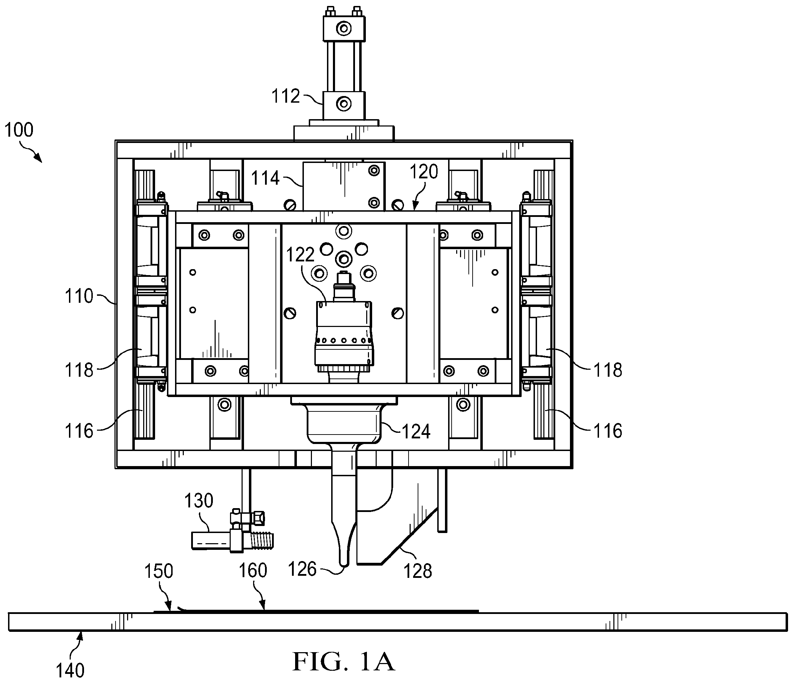

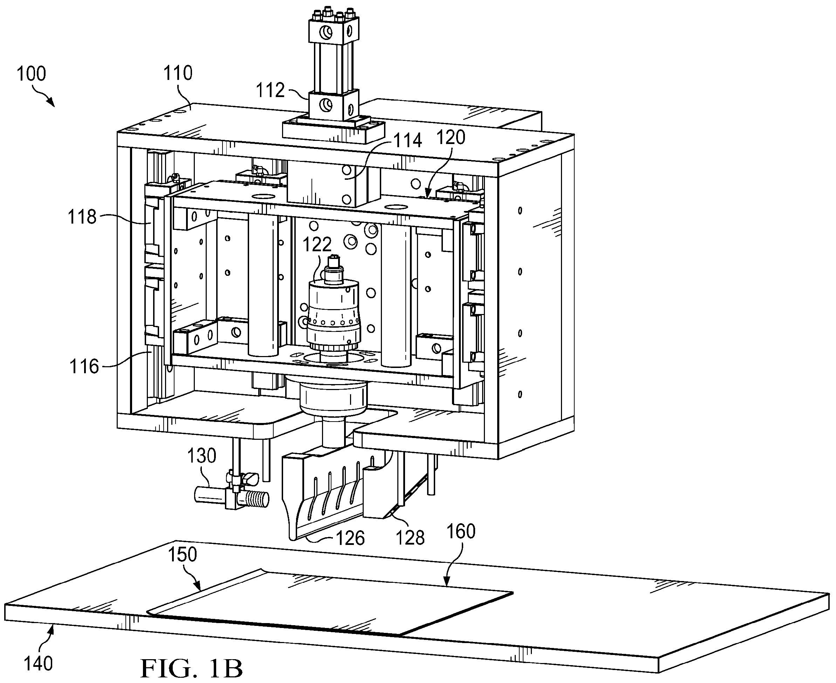

FIG. 1A provides a front view of a system and apparatus for the ultrasonic consolidation of materials, in accordance with a first example implementation of the disclosed technology; and FIG. 1B provides a front, perspective view of the system and apparatus of FIG. 1A. In FIGS. 1A-1B, ultrasonic consolidation system 100 includes enclosure 110; ultrasonic stack actuator 112; closed loop force feedback sensor 114; linear rails 116; and carriages 118, upon which ultrasonic head assembly 120 is mounted. Ultrasonic head assembly 120 includes ultrasonic transducer 122, which is connected to rigid mount booster 124; and ultrasonic sonotrode 126, which is also connected to rigid mount booster 124. Ultrasonic sonotrode lateral support 128 is attached to the bottom portion of enclosure 110, as are thermal sensors 130. Welding anvil 140 supports one or more layers of consolidating material 150; and multiple layers of material to be consolidated 160 are placed between consolidating material 150 and ultrasonic sonotrode 126 during the consolidating process.

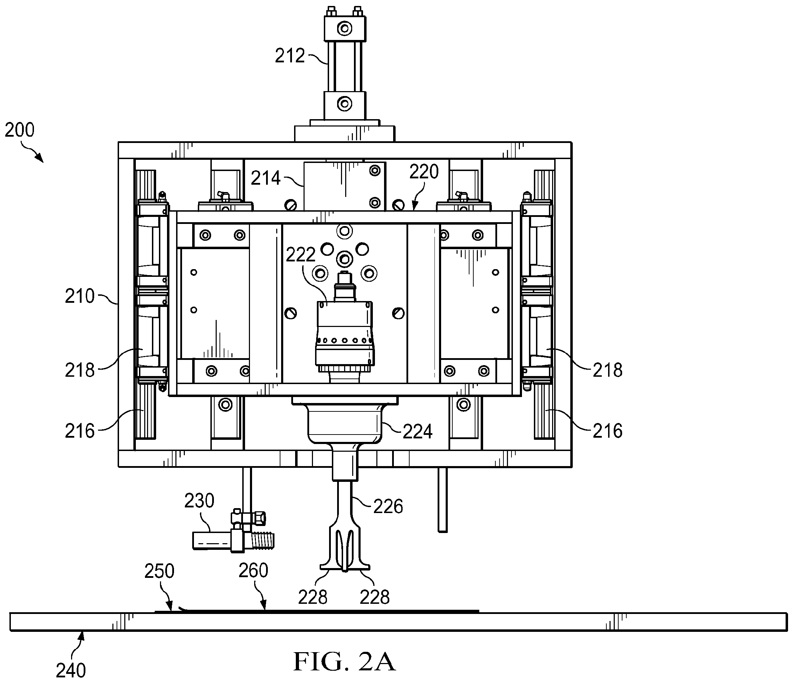

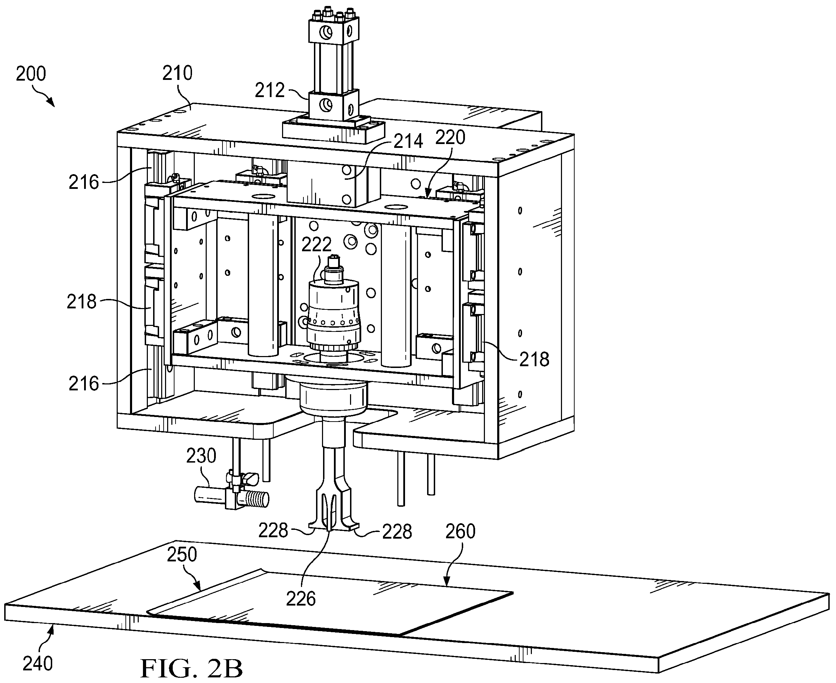

FIG. 2A provides a front view of a system and apparatus for the ultrasonic consolidation of materials, in accordance with a first example implementation of the disclosed technology; and FIG. 2B provides a front, perspective view of the system and apparatus of FIG. 2A In FIGS. 2A-2B, ultrasonic consolidation system 200 includes enclosure 210; ultrasonic stack actuator 212; closed loop force feedback sensor 214; linear rails 216; and carriages 218, upon which ultrasonic head assembly 220 is mounted. Ultrasonic head assembly 220 includes ultrasonic transducer 222, which is connected to rigid mount booster 224; and ultrasonic sonotrode 226, which is also connected to rigid mount booster 224. Thermal sensors 230 are attached to the bottom portion of enclosure 210. An integrated material hold-down structure is formed on both sides of ultrasonic sonotrode 226. Welding anvil 240 supports one or more layers of consolidating material 250; and multiple layers of material to be consolidated 260 are placed between consolidating material 250 and ultrasonic sonotrode 226 during the consolidating process.

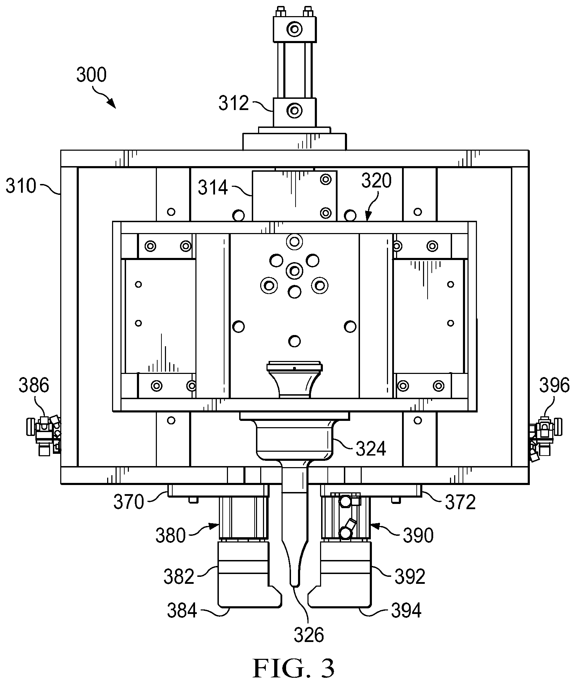

FIG. 3 provides a front view of a system and apparatus for the ultrasonic consolidation of materials, in accordance with a third example implementation of the disclosed technology. In FIG. 3, ultrasonic consolidation system 300 includes enclosure 310; ultrasonic stack actuator 312; closed loop force feedback sensor 314; and ultrasonic head assembly 320, which includes an ultrasonic transducer (not shown), rigid mount booster 324, and ultrasonic sonotrode 326. First adjustable cylinder mount 370 and second adjustable cylinder mount 372 are attached to the bottom portion of enclosure 310. Incoming material hold-down assembly 380 is attached to first adjustable cylinder mount 370 and includes thermal insulator 382 and chilled/heated region 382, which contacts the material to be consolidated or in some cases, the consolidating material. Pressure regulator 386, which controls the downward pressure of incoming material hold-down assembly 380, is attached to the side of enclosure 310. Processed material hold-down assembly 390 includes thermal insulator 392 and chilled/heated region 392, which contacts the processed (i.e., consolidated) material or in some cases, the consolidating material. Pressure regulator 396, which controls the downward pressure of processed material hold-down assembly 390, is attached to the side of enclosure 310.

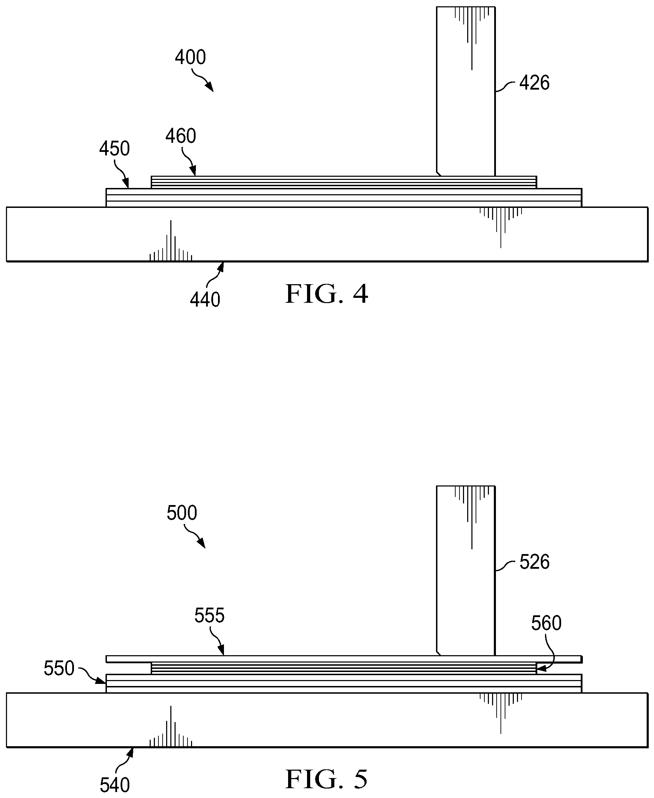

FIG. 4 depicts a first example configuration of the sonotrode, anvil, layer(s) of consolidating material, and layers of material to be consolidated placed relative to one another in accordance with the disclosed technology. In configuration 400, ultrasonic sonotrode 426 is positioned above or in close proximity to rigid anvil 440; a predetermined number or "N" layers of consolidating material 450 are positioned on rigid anvil 440; and a predetermined number or "N" layers of material to be consolidated 460 are positioned on consolidating material 450. The actual number of layers will be determined by a variety of factors including the specific material or materials being used for the consolidating material, the specific material or materials being consolidated, and the characteristics of the component or part being manufactured using the disclosed technology. In this implementation, ultrasonic sonotrode 426 is brought into contact with the uppermost layer of material to be consolidated 460 when the consolidation process begins.

FIG. 5 depicts a second example configuration of the sonotrode, anvil, layer(s) of consolidating material, and layers of material to be consolidated placed relative to one another in accordance with the disclosed technology. In configuration 500, ultrasonic sonotrode 526 is positioned above or in close proximity to rigid anvil 540; a first predetermined number or "N" layers of consolidating material 550 are positioned on rigid anvil 540; a predetermined number or "N" layers of material to be consolidated 560 are positioned on consolidating material 550; and a second predetermined number or "N" layers of consolidating material 555 are positioned on the material to be consolidated 560. The actual number of layers will be determined by a variety of factors including the specific material or materials being used for the consolidating material, the specific material or materials being consolidated, and the characteristics of the component or part being manufactured using the disclosed technology. In this implementation, ultrasonic sonotrode 526 is brought into contact with the uppermost layer of the second predetermined number or "N" layers of consolidating material 555 when the consolidation process begins.

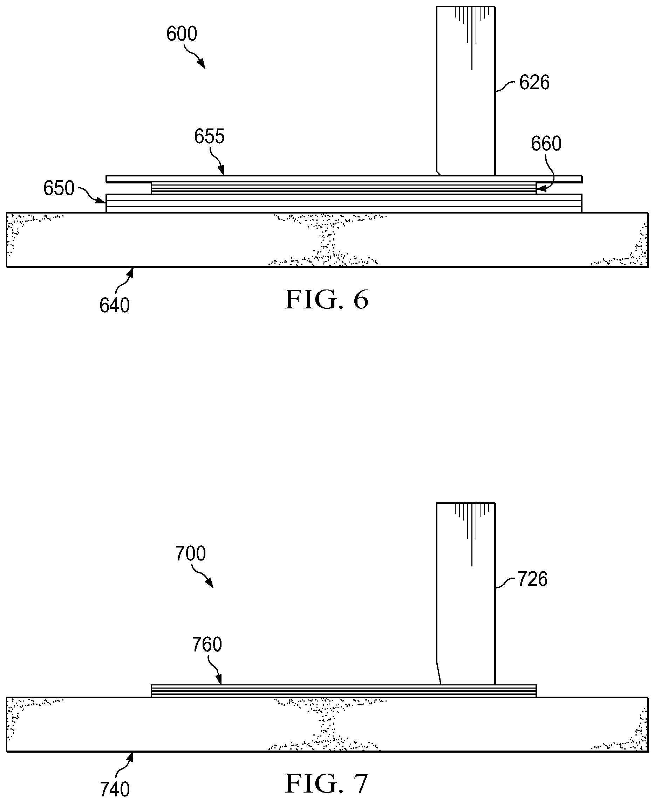

FIG. 6 depicts a third example configuration of the sonotrode, anvil, layer(s) of consolidating material, and layers of material to be consolidated placed relative to one another in accordance with the disclosed technology. In configuration 600, ultrasonic sonotrode 626 is positioned above or in close proximity to complaint anvil 640; a first predetermined number or "N" layers of consolidating material 650 are positioned on compliant anvil 640; a predetermined number or "N" layers of material to be consolidated 660 are positioned on consolidating material 650; and a second predetermined number or "N" layers of consolidating material 655 are positioned on the material to be consolidated 660. The actual number of layers will be determined by a variety of factors including the specific material or materials being used for the consolidating material, the specific material or materials being consolidated, and the characteristics of the component or part being manufactured using the disclosed technology. In this implementation, ultrasonic sonotrode 626 is brought into contact with the uppermost layer of the second predetermined number or "N" layers of consolidating material 655 when the consolidation process begins.

FIG. 7 depicts a fourth example configuration of the sonotrode, anvil, and layers of material to be consolidated placed relative to one another in accordance with the disclosed technology. In configuration 700, ultrasonic sonotrode 726 is positioned above or in close proximity to complaint anvil 740 and a predetermined number or "N" layers of material to be consolidated 760 are positioned on complaint anvil 740. The actual number of layers will be determined by a variety of factors including the specific material or materials being consolidated and the characteristics of the component or part being manufactured using the disclosed technology. In this implementation, ultrasonic sonotrode 726 is brought into contact with the uppermost layer of the material to be consolidated 760 when the consolidation process begins.

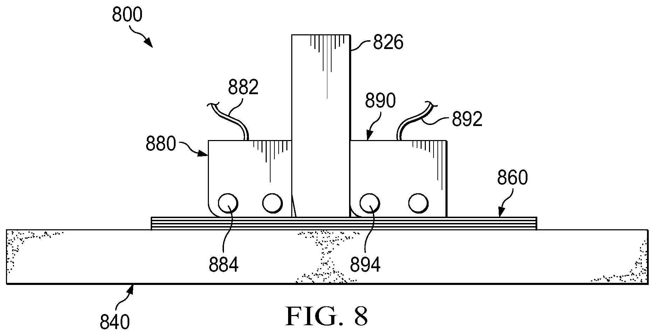

FIG. 8 depicts a fifth example configuration of the sonotrode, anvil, layer(s) of consolidating material, and layers of material to be consolidated placed relative to one another in accordance with the disclosed technology. In configuration 800, ultrasonic sonotrode 826 is positioned above or in close proximity to complaint anvil 840 and a predetermined number or "N" layers of material to be consolidated 860 are positioned on complaint anvil 840. The actual number of layers will be determined by a variety of factors including the specific material or materials being consolidated and the characteristics of the component or part being manufactured using the disclosed technology. In this implementation, ultrasonic sonotrode 826 is brought into contact with the uppermost layer of the material to be consolidated 860 when the consolidation process begins. Configuration 800 also includes the use of two anvils positioned on either side of ultrasonic sonotrode for applying downward force on the material to be consolidated (860) and for either heating or cooling the material being consolidated. As shown in FIG. 8, incoming material (pre-consolidation) anvil 880 includes thermocouple 882; and heating and cooling passages or elements 884. Outgoing material (post-consolidation) anvil 890 includes thermocouple 892; and heating and cooling passages or elements 894.

An important aspect of the disclosed technology is controlling process movements in conjunction with controlling ultrasonic processing parameters. The primary variables with respect to the ultrasonic process include, but are not limited to, ultrasonic amplitude, applied force, and total energy (i.e., energy per unit area). Machine specific parameters address or control when the ultrasonic input occurs, when the processing table starts moving, and processing speed. A control system offered to an operator permits the generation of unique processing conditions that impact weld/consolidation quality. These control features include: (i) ultrasonic activation; (ii) head actuation for programmed force; and (iii) welding motion, with a delay timer being as aspect of all three control features. Using these control features, an operator can determine when force is to be applied and for how long. The ultrasonics can then be triggered for a predetermined period of time before motion is induced. Additionally, these control features and be altered such that the ultrasonics are initiated before any force is applied. Then, force can be applied at a programmed value and motion can be initiated as desired. Advantages offered by the disclosed technology include decreased power consumption and processing times compared with other consolidation processes.

As previously stated and as used herein, the singular forms "a," "an," and "the," refer to both the singular as well as plural, unless the context clearly indicates otherwise. The term "comprising" as used herein is synonymous with "including," "containing," or "characterized by," and is inclusive or open-ended and does not exclude additional, unrecited elements or method steps. Although many methods and materials similar or equivalent to those described herein can be used, particular suitable methods and materials are described herein. Unless context indicates otherwise, the recitations of numerical ranges by endpoints include all numbers subsumed within that range. Furthermore, references to "one implementation" are not intended to be interpreted as excluding the existence of additional implementations that also incorporate the recited features. Moreover, unless explicitly stated to the contrary, implementations "comprising" or "having" an element or a plurality of elements having a particular property may include additional elements whether or not they have that property.

The terms "substantially" and "about", if or when used throughout this specification describe and account for small fluctuations, such as due to variations in processing. For example, these terms can refer to less than or equal to ±5%, such as less than or equal to ±2%, such as less than or equal to ±1%, such as less than or equal to ±0.5%, such as less than or equal to ±0.2%, such as less than or equal to ±0.1%, such as less than or equal to ±0.05%, and/or 0%.

Underlined and/or italicized headings and subheadings are used for convenience only, do not limit the disclosed subject matter, and are not referred to in connection with the interpretation of the description of the disclosed subject matter. All structural and functional equivalents to the elements of the various implementations described throughout this disclosure that are known or later come to be known to those of ordinary skill in the art are expressly incorporated herein by reference and intended to be encompassed by the disclosed subject matter. Moreover, nothing disclosed herein is intended to be dedicated to the public regardless of whether such disclosure is explicitly recited in the above description.

Also, it is noted that the implementations can be described as a process which is depicted as a flowchart, a flow diagram, a data flow diagram, a structure diagram, or a block diagram. Although a flowchart can describe the operations as a sequential process, many of the operations can be performed in parallel or concurrently. In addition, the order of the operations can be re-arranged. A process is terminated when its operations are completed but could have additional steps not included in the figure. A process can correspond to a method, a function, a procedure, a subroutine, a subprogram, etc. When a process corresponds to a function, its termination corresponds to a return of the function to the calling function or the main function.

Regarding this disclosure, the term "a plurality of" refers to two or more than two. Unless otherwise clearly defined, orientation or positional relations indicated by terms such as "upper" and "lower" are based on the orientation or positional relations as shown in the figures, only for facilitating description of the disclosed technology and simplifying the description, rather than indicating or implying that the referred devices or elements must be in a particular orientation or constructed or operated in the particular orientation, and therefore they should not be construed as limiting the disclosed technology. The terms "connected", "mounted", "fixed", etc. should be understood in a broad sense. For example, "connected" may be a fixed connection, a detachable connection, or an integral connection; a direct connection, or an indirect connection through an intermediate medium. For an ordinary skilled in the art, the specific meaning of the above terms in the disclosed technology may be understood according to specific circumstances.

It should be appreciated that all combinations of the foregoing concepts and additional concepts discussed in greater detail herein (provided such concepts are not mutually inconsistent) are contemplated as being part of the disclosed technology. In particular, all combinations of claimed subject matter appearing at the end of this disclosure are contemplated as being part of the technology disclosed herein. While the disclosed technology has been illustrated by the description of example implementations, and while the example implementations have been described in certain detail, there is no intention to restrict or in any way limit the scope of the appended claims to such detail. Additional advantages and modifications will readily appear to those skilled in the art. Therefore, the disclosed technology in its broader aspects is not limited to any of the specific details, representative devices and methods, and/or illustrative examples shown and described..

## Claims

1. A system for consolidating materials, comprising:
materials to be consolidated (860) having both a glass transition temperature and a melting temperature;
a sonotrode (826) configured to direct ultrasonic energy into the materials to be consolidated (860); and
a non-rigid consolidating material in proximity to the sonotrode (826), wherein the non-rigid consolidating material and sonotrode (826) define a region therebetween for receiving the materials to be consolidated (860), wherein the non-rigid consolidating material has a glass transition temperature that is higher than the glass transition temperature of the materials to be consolidated (860) and a melting temperature that is higher than the melting temperature of the materials to be consolidated (860);
wherein an incoming material anvil (880) is positioned on one side of the sonotrode (826) and an outgoing material anvil (890) is positioned on the opposite side of the sonotrode (826), wherein the anvils (880, 890) are configured to provide compressive force on the materials being consolidated, and wherein the anvils (880, 890) are configured to either cool or heat the materials being consolidated.

2. The system of claim 1, further comprising a rigid anvil (840) for supporting the non-rigid consolidating material.

3. The system of claims 1 or 2, further comprising at least one of a force sensor and a thermal sensor.

4. The system of any preceding claim, further comprising at least one ultrasonic transducer configured to provide ultrasonic energy to the sonotrode (826), wherein the at least one ultrasonic transducer is mounted in an articulated housing, and wherein the articulating housing is configured to provide the sonotrode (826) with compressive force and varying angles of contact relative to placement of the materials to be consolidated (860).

5. The system of any preceding claim, wherein the sonotrode (826) includes a radiused or tapered face profile, and wherein the sonotrode (826) is configured for consolidating either narrow components of a predetermined width or wide components of a predetermined width.

6. The system of any preceding claim, wherein the sonotrode (826) includes integrated hold-down structures configured to contact the materials being consolidated (860).

7. The system of any preceding claim, wherein the materials to be consolidated (860) are thermoplastic materials, thermoset materials, or carbon fiber reinforced polymers.

8. The system of any preceding claim, wherein the materials to be consolidated (860) are configured as layers of material, sheets of material, or preconsolidated structures, and/or
wherein the non-rigid consolidating material includes thermoplastic material, thermoset material, silicone, polyamide, urethane, rubber, glass woven sheets, glass, carbon fiber material, and combinations thereof, and/or
wherein the non-rigid consolidating material is configured as layers of material or sheets of material, and/or
wherein the non-rigid consolidating material has a hardness between 40 and 100 Shore A.

9. A method for consolidating materials, comprising:
(a) configuring a sonotrode (826) to direct ultrasonic energy into materials to be consolidated (860) and exert compressive force on the materials to be consolidated (860), wherein the materials to be consolidated (860) have both a glass transition temperature and a melting temperature;
(b) positioning an incoming material anvil (880) on one side of the sonotrode (826) and an outgoing material anvil (890) on the opposite side of the sonotrode (826), wherein the anvils (880, 890) are configured to provide compressive force on the materials to be consolidated (860), wherein the anvils (880, 890) are configured to either cool or heat the materials to be consolidated (860);
(c) placing a non-rigid consolidating material in proximity to the sonotrode (826),
wherein the non-rigid consolidating material and sonotrode (826) define a region therebetween for receiving the materials to be consolidated (860), and wherein the non-rigid consolidating material has a glass transition temperature that is higher than the glass transition temperature of the materials to be consolidated (826) and a melting temperature that is higher than the melting temperature of the materials to be consolidated (860); and
(d) joining the materials to be consolidated (860) by activating the sonotrode (826) and moving the sonotrode (826) across the materials under compressive force and at predetermined angles.

## Patentansprüche

1. System zur Konsolidierung von Materialien, das Folgendes umfasst:
zu konsolidierende Materialien (860) mit sowohl einer Glasübergangstemperatur als auch einer Schmelztemperatur;
eine Sonotrode (826), die dazu ausgelegt ist, Ultraschallenergie in die zu konsolidierenden Materialien (860) zu leiten; und
ein nichtstarres Konsolidierungsmaterial in der Nähe der Sonotrode (826), wobei das nichtstarre Konsolidierungsmaterial und die Sonotrode (826) zwischen sich einen Bereich für die Aufnahme der zu konsolidierenden Materialien (860) definieren, wobei das nichtstarre Konsolidierungsmaterial eine Glasübergangstemperatur, die höher ist als die Glasübergangstemperatur der zu konsolidierenden Materialien (860) und eine Schmelztemperatur, die höher ist als die Schmelztemperatur der zu konsolidierenden Materialien (860), aufweist;
wobei ein Amboss für einlaufendes Material (880) auf einer Seite der Sonotrode (826) und ein Amboss für auslaufendes Material (890) auf der entgegengesetzten Seite der Sonotrode (826) positioniert sind, wobei die Ambosse (880, 890) dazu ausgelegt sind, Druckkraft auf die Materialien auszuüben, die konsolidiert werden, und wobei die Ambosse (880, 890) dazu ausgelegt sind, Materialien, die konsolidiert werden, entweder zu kühlen oder zu erhitzen.

2. System nach Anspruch 1, das weiters einen starren Amboss (840) zum Stützen des nichtstarren Konsolidierungsmaterials umfasst.

3. System nach Anspruch 1 oder 2, das weiters zumindest eines aus einem Kraftsensor und einem Wärmesensor umfasst.

4. System nach einem der vorangegangenen Ansprüche, das weiters zumindest einen Ultraschallwandler umfasst, der dazu ausgelegt ist, Ultraschallenergie für die Sonotrode (826) bereitzustellen, wobei der zumindest eine Ultraschallwandler in einem gelenkigen Gehäuse angebracht ist, und wobei das gelenkige Gehäuse dazu ausgelegt ist, der Sonotrode (826) Druckkraft und variierende Kontaktwinkel in Bezug auf die Platzierung der zu konsolidierenden Materialien (860) bereitzustellen.

5. System nach einem der vorangegangenen Ansprüche, wobei die Sonotrode (826) ein abgerundetes oder verjüngtes Stirnflächenprofil aufweist und wobei die Sonotrode (826) dazu ausgelegt ist, entweder schmale Komponenten mit einer vorbestimmten Breite oder breite Komponenten mit einer vorbestimmten Breite zu konsolidieren.

6. System nach einem der vorangegangenen Ansprüche, wobei die Sonotrode (826) integrierte Niederhaltestrukturen umfasst, die dazu ausgelegt sind, mit den Materialien (860), die konsolidiert werden, in Kontakt zu treten.

7. System nach einem der vorangegangenen Ansprüche, wobei die zu konsolidierenden Materialien (860) thermoplastische Materialien, duroplastische Materialien oder Kohlefaserverstärkte Polymere sind.

8. System nach einem der vorangegangenen Ansprüche, wobei die zu konsolidierenden Materialien (860) als Materialschichten, Materialbahnen oder vorkonsolidierte Strukturen ausgelegt sind und/oder wobei das nichtstarre Konsolidierungsmaterial thermoplastisches Material, duroplastisches Material, Silikon, Polyamid, Urethan, Kautschuk, Glasgewebematten und Kombinationen davon umfasst; und/oder
wobei das nichtstarre Konsolidierungsmaterial als Materialschichten oder Materialbahnen ausgelegt ist und/oder
wobei das nichtstarre Konsolidierungsmaterial eine Härte zwischen 40 und 100 Shore A aufweist.

9. Verfahren zur Konsolidierung von Materialen, das Folgendes umfasst:
(a) Konfigurieren einer Sonotrode (826), sodass sie Ultraschallenergie in die zu konsolidierenden Materialien (860) einleitet und Druckkraft auf die zu konsolidierenden Materialien (860) ausübt, wobei die zu konsolidierenden Materialien (860) sowohl eine Glastemperatur als auch eine Schmelztemperatur aufweisen;
(b) Positionieren eines Ambosses für einlaufendes Material (880) auf einer Seite der Sonotrode (826) und eines Ambosses für auslaufendes Material (890) auf der entgegengesetzten Seite der Sonotrode (826), wobei die Ambosse (880, 890) dazu ausgelegt sind, Druckkraft auf die zu konsolidierenden Materialien (860) auszuüben, wobei die Ambosse (880, 890) dazu ausgelegt sind, die zu konsolidierenden Materialien (860) zu kühlen oder zu erhitzen;
(c) Platzieren eines nichtstarren Konsolidierungsmaterials in der Nähe der Sonotrode (826), wobei das nichtstarre Konsolidierungsmaterial und die Sonotrode (826) zwischen sich einen Bereich für die Aufnahme der zu konsolidierenden Materialien (860) definieren und wobei das nichtstarre Konsolidierungsmaterial eine Glasübergangstemperatur, die höher ist als die Glasübergangstemperatur der zu konsolidierenden Materialien (826) und eine Schmelztemperatur, die höher ist als die Schmelztemperatur der zu konsolidierenden Materialien (860), aufweist;
(d) Verbinden der zu konsolidierenden Materialien (860) durch Aktivieren der Sonotrode (826) und Bewegen der Sonotrode (826) über die Materialien unter Druckkraft und in vorbestimmten Winkeln.

## Revendications

1. Système de consolidation de matériaux, comprenant :
des matériaux à consolider (860) présentant à la fois une température de transition vitreuse et une température de fusion ;
une sonotrode (826) configurée pour diriger de l'énergie ultrasonore dans les matériaux à consolider (860) ; et
un matériau de consolidation non rigide à proximité de la sonotrode (826), dans lequel le matériau de consolidation non rigide et la sonotrode (826) définissent une région entre eux pour recevoir les matériaux à consolider (860), dans lequel le matériau de consolidation non rigide présente une température de transition vitreuse qui est supérieure à la température de transition vitreuse des matériaux à consolider (860) et une température de fusion qui est supérieure à la température de fusion des matériaux à consolider (860) ;
dans lequel une enclume de matériau entrant (880) est positionnée sur un côté de la sonotrode (826) et une enclume de matériau sortant (890) est positionnée sur le côté opposé de la sonotrode (826), dans lequel les enclumes (880, 890) sont configurées pour fournir une force de compression sur les matériaux étant consolidés, et dans lequel les enclumes (880, 890) sont configurées pour refroidir ou chauffer les matériaux étant consolidés.

2. Système selon la revendication 1, comprenant en outre une enclume rigide (840) pour supporter le matériau de consolidation non rigide.

3. Système selon la revendication 1 ou 2, comprenant en outre au moins un parmi un capteur de force et un capteur thermique.

4. Système selon l'une quelconque des revendications précédentes, comprenant en outre au moins un transducteur ultrasonore configuré pour fournir de l'énergie ultrasonore à la sonotrode (826), dans lequel le au moins un transducteur ultrasonore est monté dans un logement articulé, et dans lequel le logement articulé est configuré pour fournir à la sonotrode (826) une force de compression et des angles de contact variables par rapport au placement des matériaux à consolider (860).

5. Système selon l'une quelconque des revendications précédentes, dans lequel la sonotrode (826) inclut un profil de face arrondi ou conique, et dans lequel la sonotrode (826) est configurée pour consolider soit des composants étroits d'une largeur prédéterminée, soit des composants larges d'une largeur prédéterminée.

6. Système selon l'une quelconque des revendications précédentes, dans lequel la sonotrode (826) inclut des structures de maintien intégrées configurées pour venir en contact avec les matériaux étant consolidés (860).

7. Système selon l'une quelconque des revendications précédentes, dans lequel les matériaux à consolider (860) sont des matériaux thermoplastiques, des matériaux thermodurcissables ou des polymères renforcés par des fibres de carbone.

8. Système selon l'une quelconque des revendications précédentes, dans lequel les matériaux à consolider (860) sont configurés sous la forme de couches de matériau, de feuilles de matériau ou de structures préconsolidées, et/ou
dans lequel le matériau de consolidation non rigide inclut un matériau thermoplastique, un matériau thermodurcissable, du silicone, du polyamide, de l'uréthane, du caoutchouc, des feuilles tissées de verre, du verre, un matériau en fibres de carbone et des combinaisons de ceux-ci, et/ou
dans lequel le matériau de consolidation non rigide est configuré sous la forme de couches de matériau ou de feuilles de matériau, et/ou
dans lequel le matériau de consolidation non rigide présente une dureté comprise entre 40 et 100 Shore A.

9. Procédé de consolidation de matériaux, comprenant les étapes consistant à :
(a) configurer une sonotrode (826) pour diriger de l'énergie ultrasonore dans des matériaux à consolider (860) et exercer une force de compression sur les matériaux à consolider (860), dans lequel les matériaux à consolider (860) présentent à la fois une température de transition vitreuse et une température de fusion ;
(b) positionner une enclume de matériau entrant (880) sur un côté de la sonotrode (826) et une enclume de matériau sortant (890) sur le côté opposé de la sonotrode (826), dans lequel les enclumes (880, 890) sont configurées pour fournir une force de compression sur les matériaux à consolider (860), dans lequel les enclumes (880, 890) sont configurées pour refroidir ou chauffer les matériaux à consolider (860) ;
(c) placer un matériau de consolidation non rigide à proximité de la sonotrode (826),
dans lequel le matériau de consolidation non rigide et la sonotrode (826) définissent une région entre eux pour recevoir les matériaux à consolider (860), et dans lequel le matériau de consolidation non rigide présente une température de transition vitreuse qui est supérieure à la température de transition vitreuse des matériaux à consolider (826) et une température de fusion qui est supérieure à la température de fusion des matériaux à consolider (860) ; et
(d) joindre les matériaux à consolider (860) en activant la sonotrode (826) et en déplaçant la sonotrode (826) à travers les matériaux sous une force de compression et à des angles prédéterminés.
